# EUROPÄISCHE PATENTANMELDUNG

(11) **EP 1 576 872 A2**
(43) Veröffentlichungstag der Anmeldung: **21.09.2005**
(21) Anmeldenummer: 05012881.8
(22) Anmeldetag: 09.08.2001
(51) Int. Cl.: A01G 25/09

(54) **Beregnungsanlage**

(30) Priorität: 30.01.2001 AT 1472001
(62) Teilanmeldung aus: 01955118.3
(71) Anmelder: Drechsel, Arno, 9900 Lienz (AT)
(72) Erfinder: Drechsel, Arno, 9900 Lienz (AT)
(74) Vertreter: Hofinger, Stephan

(57) **Zusammenfassung**

Beregnungsanlage insbesondere für Pflanzenkulturen mit einem um eine im wesentlichen vertikale Achse in einem HorizontalWinkelbereich verschwenkbaren Regnerarm, aus dem vorne ein Wasserstrahl austritt, wobei eine elektronische Steuereinrichtung (10), über die der vom Regnerarm (6) überstrichene Horizontalwinkelbereich (a) einstellbar ist, wobei die Steuereinrichtung (10) einen elektronischen Speicher (23), in dem Werte für zwei oder mehrere Horizontalwinkelbereiche digital abspeicherbar sind, und eine programmierbare Ablaufsteuerung (22) aufweist. über die eine Abfolge von abgespeicherten Horizontalwinkelbereichen festlegbar ist. Die abgespeicherten Horizontalwinkelbereiche können über einen GPS-Empfänger festgelegt werden.

## Beschreibung

Die Erfindung betrifft eine Beregnungsanlage insbesondere für Pflanzenkulturen mit einem um eine im Wesentlichen vertikale Achse in einem Horizontalwinkelbereich verschwenkbaren Regnerarm, aus dem vorne ein Wasserstrahl austritt.

Derartige Beregnungsanlagen sind bereits bekannt und werden bereits in der Praxis eingesetzt, wobei häufig eine Wickeltrommel über einen Wasserschlauch einen verfahrbaren Regnerwagen einzieht, auf dem seinerseits der Regnerarm verschwenkbar gelagert ist. Außerdem zeigt die internationale Patentanmeldung WO00/13486 eine derartige Beregnungsanlage. Bei solchen Anlagen wird der Regnerwagen samt dem Schlauch beispielsweise mit Hilfe eines Traktors ausgezogen, wobei sich der Wasserschlauch von der Wickeltrommel abwickelt. Im eigentlichen Betrieb zieht dann die Wickeltrommel am Schlauch den Regnerwagen zu sich, wobei ein nach links und rechts schwenkender Regnerarm einen vorbestimmten Sektor mittels eines aus dem Regnerarm austretenden Wasserstrahl bewässert. Am freien Ende des Regnerarmes kann ein Strahlunterbracher vorgesehen sein, der alternierend in den Wasserstrahl eingreift und diesen auffächert, sodass sich ein im Wesentlichen den gesamten Sektor bewässernder "Wasservorhang" ergibt. Der Strahlunterbrecher kann auch die Funktion einer Strahlablenkung einnehmen, wobei das dabei erzeugte Drehmoment benutzt werden kann. um den Beregnerarm um eine vertikale Achse um einen Horizontalwinkel zu verschwenken. Es bedarf also keines gesonderten Antriebs für diese Horizontalbewegung über den Beregnungssektor. Vielmehr kann man die Wasserenergie dazu ausnutzen.

Ältere Varianten derartiger Beregnungsanlagen sind sehr unflexibel in der Bedienung. Sie erlauben meist nur eine Grundeinstellung, dh dass der Regnerarm einen einzigen vordefinierten Sektor überstreicht. Eine Umstellung ist zwar möglich aber relativ aufwendig und wurde von den Benutzern häufig bei eingeschaltetem Regner vorgenommen, was angesichts des Hochdruck-Wasserstrahls eine große Gefahr darstellt. Eine solche Umstellung ist beispielsweise dann nötig, wenn am Ende des zu beregnenden Grundstücks eine Straße vorbeiläuft, die nicht beregnet werden darf. Dann muss der Beregnungssektor beispielsweise halbkreisförmig zur Wickeltrommel hin ausgerichtet sein. Nach einem bestimmten Einzugsweg ist dann eine Umstellung nötig, bei der der Beregnungssektor dahingehend verändert wird, dass er von der Wickeltrommel weg weist.

Die oben genannte WO00/13486 zeigt bereits eine Beregnungsanlage, bei der der vom Regnerarm überstrichene Sektor während des Einziehens durch die Wickeltrommel, also während der Bewässerung, ohne manuellen Eingriff veränderbar ist. Allerdings ist die dortige Konstruktion sehr aufwendig und immer noch unflexibel. Es müssen mit auf einer Platte befestigbaren mechanischen Stiften Umkehrpunkte definiert werden, die jeweils das Ende eines Sektors festlegen. Über eine Steuerung kann dann jeweils einer dieser durch mechanische Endpunkte definierten Sektoren ausgewählt werden.

Daneben gibt es auch noch die Möglichkeit, den Regnerarm um eine fixe Achse zu verschwenken oder am Ende eines großen drehbaren Bewässerungsarmes zu lagern.

Aufgabe der Erfindung ist es, eine verbesserte Beregnungsanlage der eingangs genannten Gattung zu schaffen, die sich leicht an die Bewässerungserfordernisse der vorhandenen Fläche anpassen lässt. Außerdem soll es die Möglichkeit geben, äußere Parameter wie Windrichtung, Windgeschwindigkeit und/oder den Wasserdruck während der Bewässerung laufend automatisch berücksichtigen zu können.

Erfindungsgemäß wird dies durch eine elektronische Steuereinrichtung erreicht, über die der vom Regnerarm überstrichene Horizontalwinkelbereich einstellbar ist. Vorteilhaft verfügt die Steuereinrichtung über einen elektronischen Speicher, in dem Werte für zwei oder mehrere Horizontalwinkelbereiche digital abspeicherbar sind, und eine programmierbare Ablaufsteuerung, über die eine Abfolge von abgespeicherten Horizontalwinkelbereichen festlegbar ist.

Die erfindungsgemäße elektronische gesteuerte Beregnungsanlage erlaubt es, zahlreiche verschiedene Bewässerungssektoren (vom Wasserstrahl des Regnerarmes überstrichene Horizontalwinkelbereiche) auf einfache Weise im elektronischen Speicher vorab zu speichern. Die Definition eines solchen Horizontalwinkelbereiches kann beispielsweise durch Abspeicherung der jeweiligen Umkehrpunkte am Rand eines solchen Horizontalwinkelbereiches geschehen, an denen also der Regnerarm seine Schwenkrichtung um eine vertikale Achse umkehrt. Der Regnerarm schwenkt also dann in Betrieb zwischen den beiden jeweils durch eine programmierbare Ablaufsteuerung momentan ausgewählten Umkehrpunkten im momentanen Horizontalwinkelbereich hin und her und bewässert dabei das Grundstück. Es ist aber auch möglich, die Horizontalwinkelbereiche "indirekt" abzuspeichern, beispielsweise in Form von Parametern, aus denen dann die Steuerung die Umkehrpunkte erst berechnet. Schließlich ist bevorzugt vorgesehen, dass die Steuerung einen GPS-Empfänger mit einem Speicher zum Abspeichern mehrerer Geländepunkte aufweist. Damit lassen sich die Horizontalwinkelbereiche über abgespeicherte Geländepunkte errechnen und festlegen.

Über die erwähnte programmierbare Ablaufsteuerung lässt sich der Horizontalwinkelbereich auf einfache Weise während des Betriebes verändern. Dies kann unter "Normalbedingungen", beispielsweise in Abhängigkeit vom Einzugsweg des Wasserschlauches auf die Wickeltrommel, erfolgen. Dazu kann der Umdrehungszustand der Wickeltrommel erfasst werden. Es sind aber auch zeitabhängige Ablaufsteuerungen durchaus denkbar und möglich.

Außerdem erlaubt es die erfindungsgemäße elektronische Beregnungsanlage, von den "Normalbedingungen" abweichende Zustände automatisch zu berücksichtigen. Dazu gehört insbesondere der Einfluss des Windes, der den vom Wasserarm austretenden Wasserstrahl ablenkt und damit ohne Korrektur einen anderen Bereich beregnet, als dies dem gewünschten eingestellten Sektor (Horizontalwinkelbereich) entspricht.

Gemäß einer bevorzugten Ausführungsform der Erfindung ist deshalb eine Einrichtung zur Erfassung der Windstärke und/oder der Windrichtung vorhanden, die elektrische Signale an die elektronische Steuereinrichtung abgibt, welche dann den aktuellen Horizontalwinkelbereich verändert, um den Einfluss des Windes zu kompensieren. Dabei kann vorteilhaft auch der Vertikalwinkel, also die Höheneinstellung des Regnerarmes, um eine horizontale Achse verstellt werden.

Auch eine Regelung des Wasserdrucks ist möglich, um Druckschwankungen im Leitungsnetz zu kompensieren, um die gewünschte Wurfweite exakt einzuhalten und/oder um gegebenenfalls Windeinflüsse durch Veränderung der Tropfengröße zu kompensieren.

Weitere Vorteile und Einzelheiten der Erfindung werden anhand der nachfolgenden Figurenbeschreibung näher erläutert.
Die Fig. 1 zeigt ein Ausführungsbeispiel einer Beregnungsanlage in einer stark schematischen Seitenansicht,
die Fig. 2 zeigt eine entsprechende Draufsicht,
die Fig. 3 zeigt in einer schematischen Draufsicht eine solche Beregnungsanlage in Betrieb, wobei in Abhängigkeit vom Einzugsweg des Wasserschlauches auf die Wickeltrommel verschiedene Horizontalwinkelbereiche (Sektoren) bewässert werden,
die Fig. 4 zeigt ein Ausführungsbeispiel eines Teiles eines erfindungsgemäß ausgebildeten Regnerwagens.
die Fig. 5 zeigt ein Detail eines solchen Regnerwagens, nämlich Im Bereich der Achslagerung des nicht näher dargestellten Regnerarmes.
die Fig. 6 zeigt die automatische Kompensation des Bewässerungssektors bei einem Windeinfluss,
die Fig. 7 zeigt ein Ausführungsbeispiel eines im Vertikalwinkel bzw. der Höheneinstellung des Beregnerarmes variierbare Variante,
die Fig. 8 zeigt die elektronische Steuereinrichtung eines Ausführungsbeispiels einer erfindungsgemäßen Beregnungsanlage in einem Blockschaltbild,
die Fig. 9 und 10 zeigen weitere Ausführungsbeispiele einer solchen elektronischen Steuereinrichtung,
die Fig. 11 zeigt ein Beispiel mit einem großen drehbaren Bewässerungsarm einer Seitenansicht.
die Fig. 12 zeigt eine schematische Draufsicht auf ein Beispiel gemäß Fig. 11,
die Fig. 13 zeigt ein Ausführungsbeispiel einer elektronischen Steuereinrichtung, die durch einen GPS-Empfänger mit einem Speicher zum Abspeichern mehrerer Geländepunkte ergänzt ist,
die Fig. 14 zeigt ein Beispiel für ein zu beregnendes Feld mit einer zu beregnenden Fläche A1 und einer auszusparenden Fläche A2, die durch mittels eines GPS-Systems erfasste Geländepunkte definiert sind.

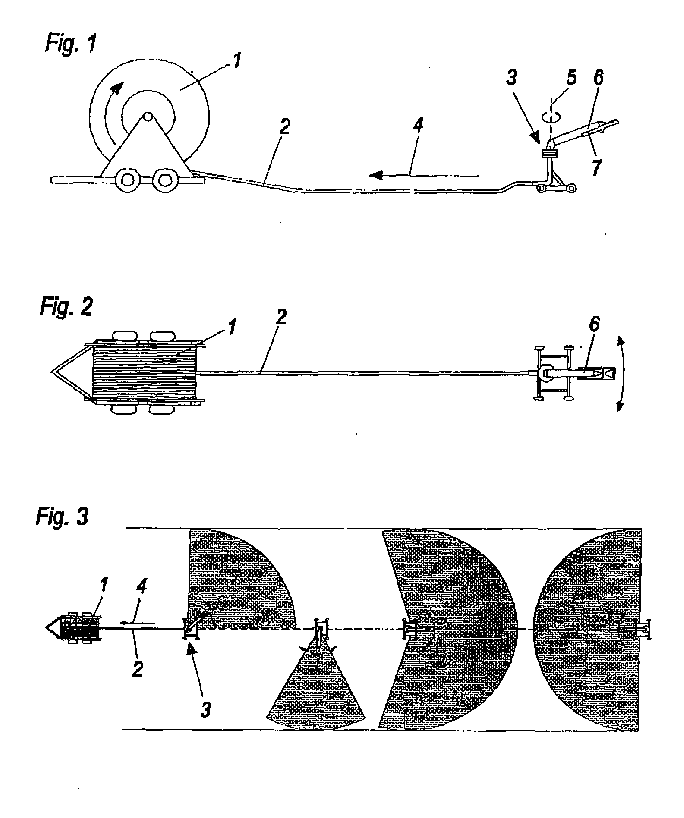

Die in Fig. 1 dargestellte Beregnungsanlage für Pflanzenkulturen weist einen auf einer Wickeltrommel 1 aufwickelbaren Wasserschlauch 2 auf. Am Ende des Wasserschlauches 2 ist ein verfahrbarer Regnerwagen 3 angeordnet, der durch Aufwickeln des Wasserschlauches 2 in Pfeilrichtung 4 eingezogen werden kann. Der Regnerwagen 3 weist einen um eine vertikale Achse 5 in einem Horitzontalwinkelbereich verschwenkbaren Regnerarm 6 auf. Der Regnerarm 6 weist vorne einen Strahlunterbrecher und -ablenker auf, der einerseits einen aufgefächerten Wasserstrahl ergibt und andererseits zur Bewegung des Regnerarmes (verschwenken über den zu beregnenden Sektor) verwendet werden kann. Die Fig. 2 zeigt eine Draufsicht auf die Fig. 1

Ebenfalls eine Draufsicht zeigt die Fig. 3, wobei vier der beliebig verschiedenen Positionen (Einzugswege des Wasserschlauches 2) beispielhaft dargestellt sind. Es ist ersichtlich, dass der Regnerarm bei diesen verschiedenen Einzugspositionen des Wasserschlauches jeweils in ihrer Breite und Ausrichtung unterschiedliche Horizontalwinkelbereiche (Beregnungssektoren) überstreicht. Der Horizontalwinkel ist jeweils mit α bezeichnet. Dabei kann beispielsweise eine am Grundstücksende vorbeilaufende Straße von der Bewässerung ausgespart werden. Mittels eines kleinen Horizontalwinkelbereiches kann beispielsweise ein vorhandenes Gebäude von der Bewässerung ausgenommen werden. Insgesamt lässt sich damit die Bewässerung optimieren und der Wasserverbrauch senken.

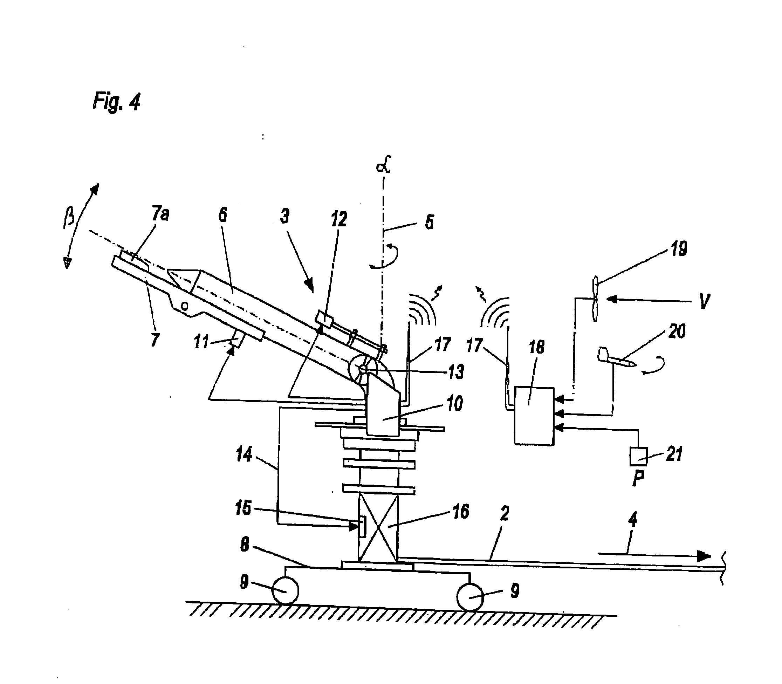

Die Fig. 4 zeigt nun ein Ausführungsbeispiel eines erfindungsgemäßen Regnerwagens im größeren Detail. Der dargestellte Regnerwagen ist auf einem schematisch dargestellten Gestell 8 auf Rädern 9 verfahrbar, und zwar durch Zug am Wasserschlauch 2 in Richtung 4. Die Wickeltrommel, die den Schlauch 2 aufwickelt und damit den gesamten Regnerwagen 3 zieht, ist in Fig. 4 nicht dargestellt. Der Regnerwagen 3 weist einen Regnerarm 6 auf, der um eine vertikale Achse 5 um einen Winkel α verschwenkbar ist, um über einen Horizontalwinkelbereich α eine Beregnung vorzunehmen. Der Antrieb für diese horizontale Schwenkbewegung erfolgt dabei durch Ablenkung des Wasserstrahls im kombinierten Strahlunterbrecher und -ablenker 7. Dieser ist über die elektronische Steuereinrichtung 10 über ein Stellglied 11 verstellbar, sodass die Schwenkrichtung umkehrbar ist. Das Stellglied 11 bewegt dabei den Strahlunterbrecher und -ablenker 7 so, dass das in den Strahl eintauchende Ablenkelement 7a wahlweise leicht links bzw. rechts versetzt zur Strahlmitte verläuft. Damit wird ein Drehmoment auf den Regnerarm 3 ausgeübt, und dieser verschwenkt in die gewünschte Richtung. Es wird also die Wasserkraft verwendet, um den Horizontalwinkelbereich zu überstreichen. Selbstverständlich besteht alternativ auch die Möglichkeit, aktiv einen elektrischen Servomotor oder Schrittmotor einzusetzen, um das Verschwenken um die vertikale Achse (Winkel α) zu erzielen. Die Horizontalbewegung unter Ausnützung des Wasserstrahls ist jedoch bereits Stand der Technik, sodass bei einer derartigen Verwendung keine Umstellung nötig ist. Auch lässt sich diese Variante, welche in Fig. 4 gezeigt ist. mit robusten Bauteilen realisieren.

Die im Folgenden noch näher beschriebene elektronische Steuereinrichtung kann außerdem über einen Stellmotor 12 die Höhenlage, also die Winkelstellung, um eine horizontale Achse 13 (Winkel β) des Regnerarmes 6 einstellen. Schließlich kann die elektronische Steuereinrichtung über eine Steuerleitung 14 ein Druckregelventil 15 (schematisch im Sockel 16 dargestellt) ansteuern, um eine Beeinflussung der Wurfweite bei sonst gleichen Parametern zu erzielen.

Bei dem in Fig. 4 dargestellten Ausführungsbeispiel steht die elektronische Steuereinrichtung 10 über Antennen 17 in Funkkontakt mit einer gegebenenfalls räumlich getrennt aufgestellten Außenstelle 18. Diese stellt zusammen mit dem Windrad 19 und dem Windrichtungsmesser 20 eine Einrichtung zur Erfassung der Windrichtung und/oder der Windstärke dar. Außerdem stellt diese Außenstelle in Kombination mit dem Drucksensor 21 eine Einrichtung zur Erfassung des Wasserdrucks dar.

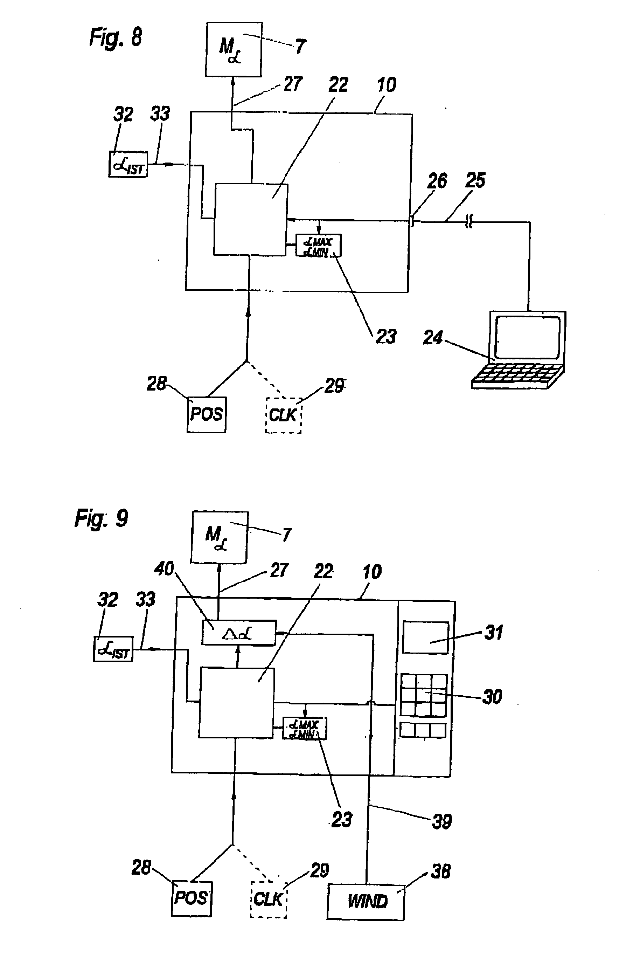

Die Fig. 8 zeigt nun in einem schematischen Blockdiagramm ein erstes Ausführungsbeispiel einer elektronischen Steuereinrichtung einer erfindungsgemäßen Beregnungsanlage. Die Steuereinrichtung 10 weist eine programmierbare Ablaufsteuerung 22 auf, über die eine Abfolge von abgespeicherten Horizontalwinkelbereichen festlegbar ist. Diese Horizontalwinkelbereiche sind beispielsweise durch ihre Endpunkte α_{MAX} und α_{MIN} definiert und im elektronischen Speicher 23 abgelegt. Die elektronische Ablaufsteuerung ist beispielsweise über ein externes Programmiergerät 24 (beispielsweise ein Personal Computer) über eine Leitung 25 und eine Schnittstelle 26 programmierbar, wobei über diese Einrichtung 24 auch die Horizontalwinkelbereiche in den Speicher 23 ablegbar sind.

Die Ablaufsteuerung 22 der elektronischen Steuereinrichtung 10 steuert vorzugsweise den Horizontalwinkel durch Ansteuern des Strahlablenkers 7 über die Leitung 27 und das Stellglied 11, und zwar günstigerweise in Abhängigkeit von der über die Einrichtung 28 erfassten Position des Regnerwagens 3 relativ zur Wickeltrommel 1, also in Abhängigkeit vom Einzugsweg des Schlauches 2. Die gesamte Einrichtung ist dabei sehr flexibel. Es lassen sich zahlreiche Horizontalwinkelbereiche in der Steuereinrichtung ablegen und dann von der Ablaufsteuerung 2 in beliebiger Weise und Reihenfolge auswählen.

Alternativ zur Abhängigkeit vom Einzugsweg kann die Ablaufsteuerung natürlich auch rein zeitabhängig, also in Abhängigkeit von einem Zeitsignal, aus einem (in der Praxis vorzugsweise integrierten) Taktgeber 29 erfolgen. Die Programmierung inklusive der Ablegung der die Horizontalwinkelbereiche definierenden Umkehrpunkte α_{MAX} und α_{MIN} im Speicher 3 kann natürlich auch auf andere Weise als über eine Datenleitung 15 und ein externes Programmiergerät 24 erfolgen, beispielsweise durch eine integrierte Tastatur 30 mit Anzeige 31, wie dies in Fig. 9 gezeigt ist. Es ist aber auch möglich, beispielsweise eine transportable Chipkarte vorzusehen, die extern programmiert und geladen und dann in den Regnerwagen bzw. dessen elektronischer Steuereinrichtung eingeschoben wird.

In Fig. 8 ist noch eine Einrichtung 32 zur Erfassung des Istwertes des momentanen Horizontalwinkels (α_{IST}) des Regnerarmes 6 vorgesehen, wobei diese Einrichtung 32 über eine Leitung 33 ein elektrisches Signal an die elektronische Steuereinrichtung 10, genauer gesagt an die Ablaufsteuerung 22 abgibt. Diese verstellt dann über das Stellglied 11 durch den Strahlablenker 7 den Horizontalwinkel so lange, bis der momentan aktuelle Umkehrpunkt α_{MAX} bzw. α_{MIN} erreicht ist. Damit kann slchergestellt werden, dass der Regnerarm 6 präzise zwischen den beiden momentan aktiven Horizontalwinkelumkehrpunkten α_{MAX} und α_{MIN} hin und her schwenkt. Die genannten Winkel werden dabei in Bezug auf den Regnerwagen 3 gemessen.

Es versteht sich von selbst, dass der Speicher 23 und die elektronische Ablaufsteuerung 22 in einer gemeinsamen Mikroprozessoreinheit zusammengefasst werden können.

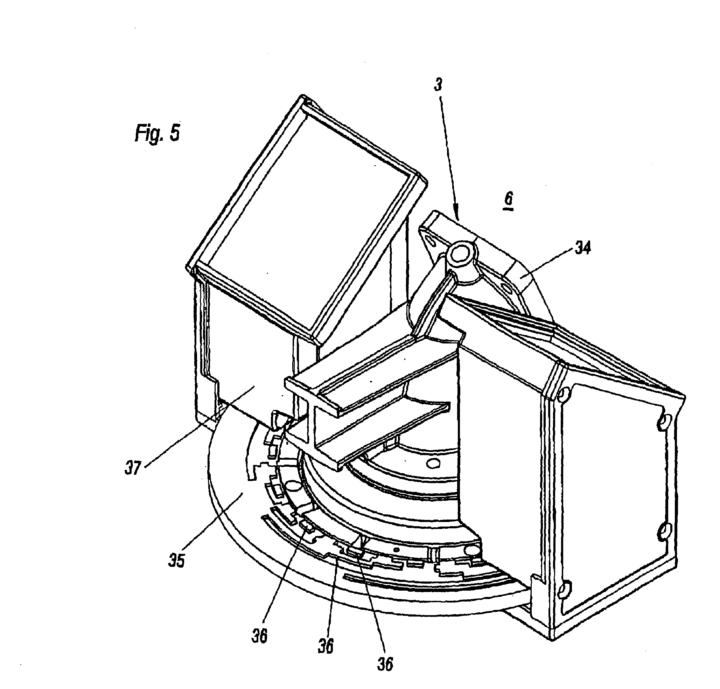

Die Fig. 5 zeigt den Lagerbereich des Regnerarmes 6, der der Übersichtlichkeit halber selbst nicht dargestellt ist. Er wird am Flansch 34 befestigt. Drehfest mit dem Untergestell des Regnerwagens ist eine Scheibe 35 verbunden, die in Gray-Code codierte Ausnehmungen 36 aufweist, die von einer Serie radial ausgerichteter Hallsensoren im Steuerkasten 37 auslesbar ist. Der Steuerkasten 37 bzw. die nicht näher dargestellten Hallsensoren sind drehfest mit dem Flansch 34 für den Regnerarm verbunden. Damit kann über diese Einrichtung der Istwert des Horizontalwinkels des Regnerarmes erfasst und an die elektronische Steuereinrichtung 10 weitergegeben werden. Diese Ausführung ist besonders robust und an die rauen Verhältnisse beim Betrieb eines solchen Regners angepasst. Selbstverständlich sind aber auch andere Einrichtungen zur Erfassung des Istwertes des momentanen Horizontalwinkels möglich, beispielsweise über Zahnriemen angetriebene Winkelencoder oder dergleichen.

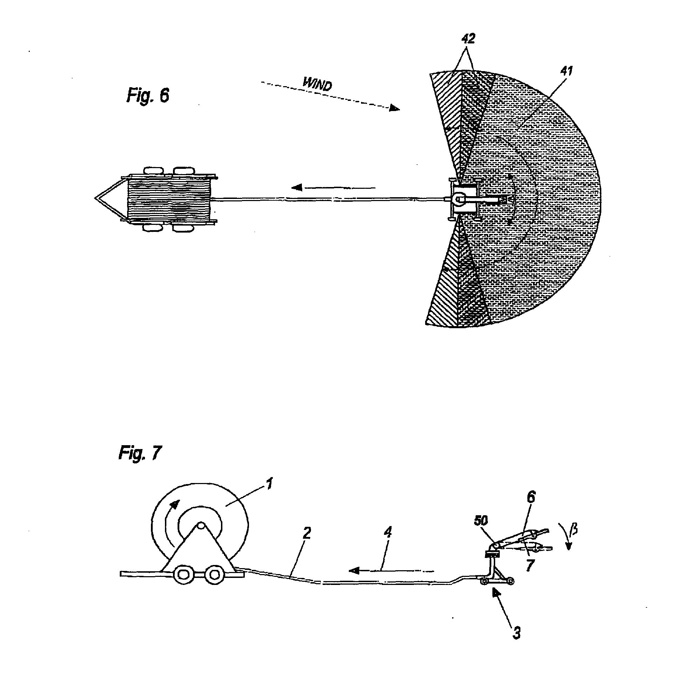

Das in Fig. 9 dargestellte Ausführungsbeispiel einer elektronischen Steuereinrichtung 10 entspricht in zahlreichen Komponenten dem Ausführungsbeispiel der Fig. 8, welche die gleichen Bezugsziffern tragen und daher nicht nochmals beschrieben werden. Unterschiedlich ist, wie bereits erwähnt, die integrierte Bedieneinheit mit einer Tastatur 30 und einer Anzeige 31 zum Programmieren der Ablaufsteuerung 22 bzw. Abspeichern der gewünschten Umschaltpunkte für den Horizontalwinkelbereich im Speicher 23. Darüber hinaus weist die Einrichtung gemäß Fig. 9 eine Einrichtung 38 zur Erfassung der Windstärke bzw. Windrichtung auf. Diese Einrichtung gibt elektrische Steuersignale über die Leitung 39 an eine Korrektureinheit 40 ab, die natürlich auch in der elektronischen Ablaufsteuerung integriert sein kann. Damit kann der ursprünglich (ohne Wind) zu beregnende Horizontalwinkelbereich (punktierter Sektor in Fig. 6 mit Bezugszeichen 41) je nach Windrichtung und -stärke verschoben werden, wie dies in Fig. 6 mit Bezugsziffer 42 dargestellt ist. Zusammen mit dem Windeinfluss ergibt sich dann im Wesentlichen wiederum die Bewässerung der gewünschten punktierten Fläche 41.

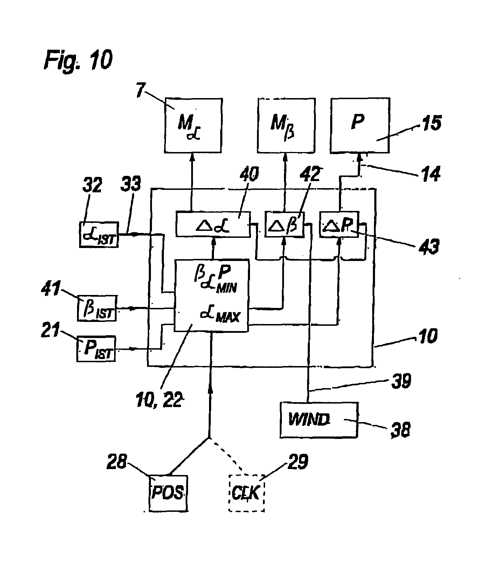

Bei dem in Fig. 10 dargestellten Ausführungsbeispiel ist der Übersichtlichkeit halber die Programmier- bzw. Bedieneinrichtung nicht dargestellt. Sie kann beispielsweise so ausgebildet sein, wie dies oben erwähnt ist. Außerdem ist bei diesem Ausführungsbeispiel der Speicher für die Umkehrpunkte der Horizontalwinkelbereiche in der Ablaufsteuerung 22 integriert. Ansonsten weist dieses Ausführungsbeispiel wiederum einige Komponenten auf, die mit den vorigen Beispielen übereinstimmen und deshalb hier nicht nochmals erläutert werden müssen. Bei diesem Ausführungsbeispiel kann neben einer Veränderung des Horizontalwinkelbereiches (α) in Abhängigkeit von Windeinfluss auch noch der Höhenwinkel β variiert werden. Um dies im Sinne einer präzisen Regelung durchführen zu können, kann eine Einrichtung 41 zur Erfassung des Istwertes des momentanen Höhenwinkels β_{IST} vorgesehen sein. In Abhängigkeit vom Windeinfluss kann dann der Höhenwinkel über eine Korrektureinrichtung 42, die natürlich auch in der elektronischen Ablaufsteuerung 22 integriert sein kann, variiert werden. Beispielsweise ist es möglich, den Höhenwinkel etwas abzusenken, wie dies in Fig. 7 (der besseren Darstellung halber übertrieben) dargestellt ist. Damit kann eine flachere Strahlkurve und eine geringere Beeinflussbarkeit durch - insbesondere seitliche - Windeinflüsse erzielt werden.

Außerdem ist es möglich, den Wasserdruck zu regeln, wozu eine Einrichtung 21 zur Erfassung des Istwertes des Wasserdrucks vorgesehen ist. Der Wasserdruck kann zur Einstellung der Wurfweite und zum Ausgleich von Druckschwankungen geregelt werden, wobei die elektronische Steuereinrichtung 10 ein Signal über die Leitung 14 an ein Druckregelventil 15 (vgl. auch Fig. 4) abgibt. Zusätzlich kann noch vorgesehen sein, den Wasserdruck in Abhängigkeit vom Windeinfluss zu korrigieren, beispielsweise in der Einheit 43, die auch in der elektronischen Ablaufsteuerung 22 integriert sein kann.

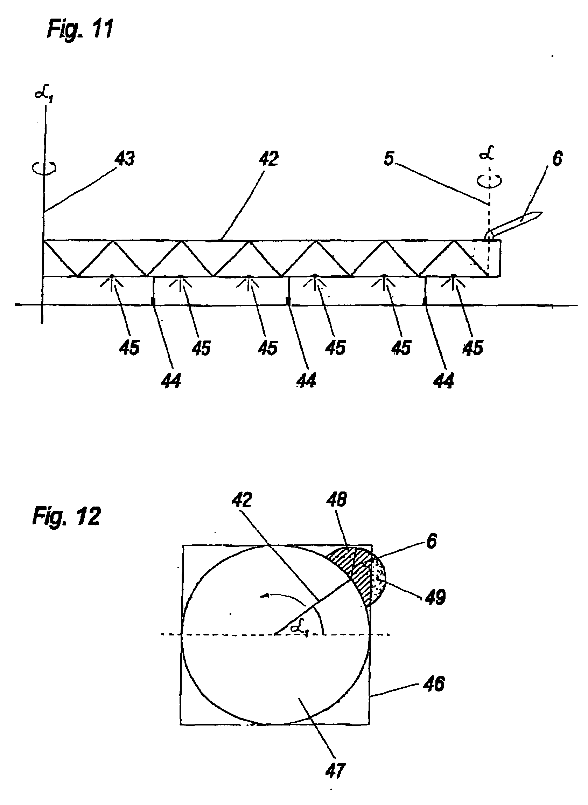

Die Fig. 11 zeigt ein Ausführungsbeispiel, bei dem der Regnerarm 6 am freien Ende eines großen drehbar gelagerten Bewässerungsarmes 42 gelagert ist. Dieser große Bewässerungsarm ist um eine Achse 43 (Horizontalwinkel α₁) durch einen nicht näher dargestellten Antrieb bewegbar. Solche Bewässerungssysteme kommen zur Bewässerung von großen Pflanzenkulturen zum Einsatz. Sie laufen auf Rädern 44 um und verteilen Wasser über Düsen 45.

Der Regnerarm 6 ist relativ zum großen Bewässerungsarm 42 um eine vertikale Achse 5 (Winkel α) verschwenkbar gelagert.

Damit ergibt sich die in Fig. 12 dargestellte Situation, beispielsweise zur Bewässerung eines quadratischen Grundstückes 46. Der große Bewässerungsarm 42 kann durch Verdrehen um den Winkel α₁ im Wesentlichen die Kreisfläche 47 bewässern. Die zwischen den Ecken des Quadrates und dem Kreis liegenden Flächen würden normalerweise unbewässert bleiben. Dazu dient nun der am Ende des großen Bewässerungsarmes 42 befestigte drehbare Regnerarm 6, der zusätzlich die Fläche 48 bewässern kann. Dabei kann durch Reduzierung des Wasserdrucks und/oder der Druckhöhe sogar erreicht werden, dass keine Fläche 49 außerhalb des Quadrates 46 bewässert wird, falls eine solche Bewässerung stören würde. Im Allgemeinen geht es aber hier nicht um ganz exakte Grenzen, sondern vielmehr darum, die Flächenbereiche zwischen dem Kreis und dem Quadrat in den Ecken durch den Regnerarm 6 unter möglichst großer Einsparung von Wasser optimal zu beregnen.

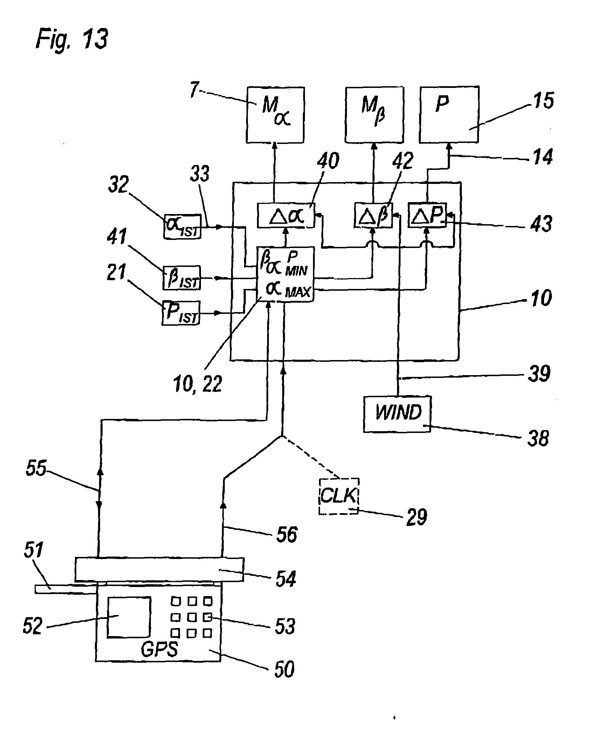

Bei dem in Fig. 13 dargestellten Ausführungsbeispiel ist die Steuereinrichtung 10 durch einen GPS-Empfänger 50 ergänzt. Dieser GPS-Empfänger 50 weist einen Speicher zum Abspeichern mehrerer Geländepunkte auf, worauf im Folgenden noch näher eingegangen wird. Ein solcher GPS-Empfänger weist eine Antenne 51, ein Display 52 und eine Tastatur 53 auf. Er ist in der Lage, als GPS-System (Global Positioning System) aus Satellitendaten seine Lage exakt festzulegen.

Beim dargestellten Ausführungsbeispiel ist der GPS-Empfänger 50 von einer Konsole 54, mit der er über Steckkontakte in Verbindung steht, abnehmbar ausgebildet. Damit ist eine Arbeitsweise möglich, die im Folgenden noch näher beschrieben wird. Sie besteht im Wesentlichen darin, dass man mit dem abgenommenen GPS-Empfänger ein zu beregnendes Feld an den Grenzen abgeht und die das Feld definierenden Eckpunkte eingibt. Diese werden dann im Speicher des GPS-Empfängers selbst abgespeichert. Die Geländedaten können über die Leitung 55 entweder in einen Speicher der Steuereinrichtung 10 geladen bzw. im Speicher des GPS-Empfängers 50 verbleiben, wobei dann die Ablaufsteuerung 22 auf diese Daten zugreift. Während des eigentlichen Beregnungsvorganges gibt der GPS-Empfänger Ober die Leitung 56 laufend Positionsdaten an die Steuereinrichtung 10 weiter. Eine gesonderte Einrichtung 28, wie sie bei den früheren Ausführungsbeispielen beschrieben war, kann daher entfallen.

### Detailliert funktioniert das System wie folgt

Auf dem Regner ist ein mit der Systemsteuerung 10 verbundenes und abnehmbares GPS-Empfänger Modul 50 montiert. In dieses Empfängermodul ist ein Speicher zum Abspeichern von GPS-Punkten integriert. Vorzugsweise lässt sich ein handelsübliches GPS-Handgerät mit Schnittstelle verwenden. Es ist aber möglich, einen GPS-Modul in ein eigenes Gehäuse einzubauen.

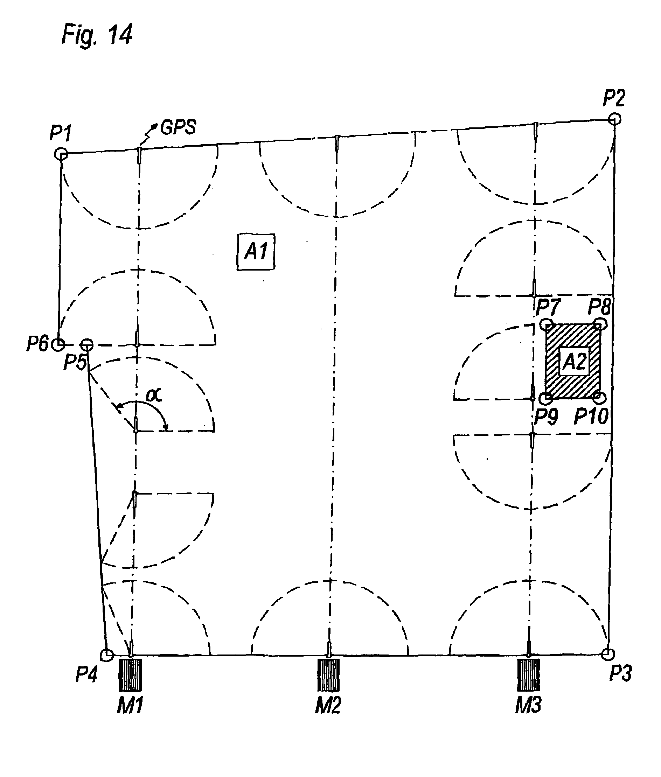

Bei erster Anwendung des Gerätes auf einem bestimmten Feld oder bei Anwendung auf einem neuen Feld nimmt der Anwender das GPS-Modul vom Regner ab und geht die Grenzen des Feldes ab. Von jedem Eckpunkt des Feldes werden die GPS-Daten abgespeichert. Um ein Feld A1 zu beschreiben, können beliebig viele Eckpunkte abgespeichert werden, mindestens jedoch drei Punkte. In der Fig. 14 sind es P1 - P6. Befinden sich im Inneren des Feldes Flächen bzw. Gebäude oder Hindernisse, die nicht beregnet werden sollen, so werden die Eckpunkte der auszuschließenden Fläche A2 in der Fig. 14 P7 - P10 ebenfalls entsprechend gespeichert.

Der Anwender befestigt das Modul 50 wieder an seinem Platz an der Regnersteuerung. Das Beregnungssystem wird in Betrieb genommen. Das System weiß durch das GPS wo sich der Regner befindet. Ein Algorithmus, welcher in der Systemsteuerung des Regners integriert ist, errechnet anhand der aktuellen GPS-Position des Regners und den Verbindungslinien der vorher gespeicherten Eckpunkte den zur Einhaltung und optimalen Ausregnung der Fläche benötigten momentanen Sektorwinkel (Horizontalwinkel α). Der Sektorwinkel wird an die Steuerung der Beregnungsmaschinen gesandt, welche ihrerseits die dem jeweiligen Sektorwinkel entsprechende Einzugsgeschwindigkeit des Regners zur Erzielung einer konstanten Niederschlagsmenge über die gesamte Einzugsstrecke des Regners errechnet und einstellt.

Trifft der Regner auf eine Fläche, welche von der Beregnung ausgeschlossen werden soll, dann wird der Sektorwinkel so eingestellt, dass die Fläche umschrieben wird.

Bei der Errechnung der Einzugsgeschwindigkeit wird auch berücksichtigt, ob der Regner eine vom Wasserstrahl bestrichene Fläche zweimal beregnet. Das kommt vor, wenn der Regner seine Hauptorientierungsrichtung um 180° dreht, wie am Anfang, am Ende oder an Stufen des Feldes.

Es kann auch in Abhängigkeit von den GPS-Punkten die Wurfweite verstellt werden, wenn dies nötig ist.

In der Fig. 14 sind schematisch einige benötigte Sektorwinkel zur kompletten Ausregnung der Fläche A1 und Umschreibung der Fläche A2 dargestellt.

Die Aufstellpositionen der Beregnungsmaschine sind gewählt, um das Funktionsprinzip zu erklären, in der Praxis werden die Abstände zwischen zwei Positionen der Beregnungsmaschine so gewählt, dass eine Überlappung der beregneten Fläche erzielt wird.

Bei Center-Pivot-Systemen (wie beispielsweise in Fig. 12 gezeigt) können ebenfalls die Eckpunkte der zu beregnenden Fläche gespeichert werden, und der Regner wird dann nur in diesem Bereich beregnen. Um auch hier die Wasserverteilung konstant zu halten, wird es sinnvoll sein, die Einschaltdauer des Regners am Anfang und am Ende eines jeden zu beregnenden Sektors zu steuem.

Vorteil dieses GPS gesteuerten Systems ist es, dass der Regner von der Beregnungsmaschine keine Positionsdaten über seine aktuelle Position im Feld benötigt und somit autonom und unabhängig den zur Einhaltung der Feldgrenzen benötigten horizontalen Sektorwinkel errechnen kann. Es wird keine Datenübertragung benötigt, das heißt, dass der so ausgerüstete Regner auf jede Beregnungsmaschine, auch noch so alte nachgerüstet werden kann.

Ein weiterer großer Vorteil ist es, dass dieses System es ermöglicht, ein Feld in den Ecken vollständig auszuregnen, ohne die Feldgrenzen zu überschreiten oder sich im Feld befindliche Flächen, welche nicht beregnet werden sollen, präzise zu umregnen vermag.

Eine zusätzliche Verbesserung zum obigen unabhängigen System lässt sich erzielen, wenn der Regner seinen momentanen horizontalen Sektorwinkel an die Steuerung der Beregnungsmaschine sendet (Funk oder Kabel). Die Beregnungsmaschine kann dann ihrerseits die Einzugsgeschwindigkeit des Regners so regeln, dass die vom Regner pro Zeiteinheit abgegebene Wassermenge auf der vom jeweiligen horizontalen Sektorwinkel begrenzte Fläche konstant bleibt. Damit ist eine gleichmäßige Wasserverteilung auf der gesamten beregneten Fläche gewährleistet.

Es können Daten von beliebig vielen Feldern abgespeichert werden, der Regner erkennt automatisch, in welchem Feld und an welcher Aufstellungsposition der Beregnungsmaschine im Feld er sich befindet und regelt den horizontalen Sektorwinkel entsprechend.

Das GPS-Modul kann vom Regner abgenommen werden und zum Erfassen der Eckpunkte des Feldes benützt werden, wie dies bereits beschrieben wurde.

Wie die obigen Beispiele zeigen, kann die erfindungsgemäße Beregnungsanlage auf zahlreiche Arten realisiert werden. Selbstverständlich sind auch weitere Ausführungsvarianten denkbar und möglich. Beispielsweise können anstelle von Pflanzenkulturen auch Kohlehalden oder Erzhalden beregnet werden. Auch in der Abwasserverregnung ist die Erfindung einsetzbar. Dabei können insbesondere drehbare, aber ansonsten nicht verschiebbar oder verfahrbar gelagerte fixe Regner zum Einsatz kommen.

## Patentansprüche

1. Beregnungsanlage insbesondere für Pflanzenkulturen mit einem um eine im wesentlichen vertikale Achse in einem Horizontalwinkelbereich verschwenkbaren Regnerarm, aus dem vorne ein Wasserstrahl austritt, **dadurch gekennzeichnet, dass** sie einen GPS-Empfänger mit einem Speicher zum Abspeichern mehrerer Geländepunkte aufweist.

2. Beregnungsanlage nach Anspruch 1, **dadurch gekennzeichnet, dass** der GPS-Empfänger am Regnerarm (6), an einem bewegbaren Träger (3, 42) desselben oder an der vorzugsweise mit dem Regnerarm (6) bzw. dessen Träger (3, 42) mitbewegten Steuereinrichtung (10) abnehmbar angebracht ist und eine zum Abspeichern von Geländepunkten im abgenommenen Zustand eine autonome Energieversorgung aufweist.

3. Beregnungsanlage nach Anspruch 1 oder 2, **dadurch gekennzeichnet, dass** die Steuereinrichtung in Abhängigkeit von vom GPS-Empfänger vorab gespeicherten Geländepunkten einerseits und dem momentanen, vom GPS-Empfänger ermittelten Istwert des Ortes des Regnerarmes bzw. des bewegbaren Trägers desselben andererseits, den Horizontalwinkelbereich und/oder die Wurfweite des Regnerarmes einstellt.

4. Beregnungsanlage nach Anspruch 3, **dadurch gekennzeichnet, dass** die Einstellung der Wurfweite durch Veränderung des Höhenwinkels (β) des Regnerarmes, des Wasserdruckes (p) und/oder der Düsengröße des austretenden Wasserstrahles erfolgt.

5. Beregnungsanlage nach Anspruch 3, **dadurch gekennzeichnet, dass** die Steuereinrichtung (10), über die der vom Regnerarm (6) überstrichene Horizontalwinkelbereich (α) einstellbar ist, einen elektronischen Speicher (23), in dem Werte für zwei oder mehrere Horizontalwinkelbereiche digital abspeicherbar sind, und eine programmierbare Ablaufsteuerung (22) aufweist, über die eine Abfolge von abgespeicherten Horizontalwinkelbereichen festlegbar ist.

6. Beregnungsanlage nach einem der Ansprüche 1 bis 5. **dadurch gekennzeichnet, dass** der Regnerarm frei drehbar gelagert ist und einen schwenkbar gelagerten, steuerbaren Wasserstrahlablenker (7) aufweist, über den ein Drehmoment auf den Regnerarm ausübbar ist, wobei der Wasserstrahlablenker (7) von der elektronischen Steuereinrichtung vorzugsweise über einen EleKtromotor (11) oder mindestens einen Elektromagneten angesteuert ist.

7. Beregnungsanlage nach einem der Ansprüche 1 bis 5, **dadurch gekennzeichnet, dass** der Regnerarm (6) um seine im wesentlichen vertikale Achse (5) von einem elektrischen Servomotor oder Schrittmotor verschwenkbar ist, wobei der Servomotor oder Schrittmotor von der elektronischen Steuereinrichtung angesteuert ist.

8. Beregnungsanlage nach einem der Ansprüche 1 bis 7, **dadurch gekennzeichnet, dass** sie eine Einrichtung zur Erfassung (32) des Istwertes des momentanen Horizontalwinkels des Regnerarmes (6) aufweist, wobei diese Einrichtung ein elektrisches Signal an die elektronische Steuereinrichtung (10) abgibt.

9. Beregnungsanlage nach Anspruch 8, **dadurch gekennzeichnet, dass** die Einrichtung zur Erfassung des Istwertes des momentanen Horizontalwinkeis einen Ring (35) aus magnetisierbarem Material mit vorzugsweise im Gray-Code codierten Aussparungen aufweist, wobei mehrere in radialer Richtung des Ringes (35) ausgerichtete Hallsensoren in Abhängigkeit von ihrer Relativstellung zum Ring dem Horizontalwinkel des Regnerarmes (6) entsprechende Signale an die elektronische Steuereinrichtung (10) abgeben.

10. Beregnungsanlage nach Anspruch 8, **dadurch gekennzeichnet, dass** die Einrichtung zur Erfassung des Istwertes des momentanen Horizontalwinkels einen vorzugsweise über einen Zahnriemen angetriebenen Winkel-Encoder aufweist.

11. Beregnungsanlage nach einem der Ansprüche 1 bis 10, **dadurch gekennzeichnet, dass** der Regnerarm (6) um eine im Wesentlichen horizontale Achse (50) höhenmäßig verschwenkbar gelagert ist.

12. Beregnungsanlage nach Anspruch 11, **gekennzeichnet durch** einen vorzugsweise von der elektronischen Steuereinrichtung (10) angesteuerten, elektrischen Stellmotor (12) zur Höheneinstellung des Regnerarmes (6) aufweist.

13. Beregnungsanlage nach einem der Ansprüche 1 bis 12, **gekennzeichnet durch** eine Einrichtung zur Erfassung (18, 19, 20; 38) der Windrichtung und/oder der Windstärke, die vorzugsweise elektrische Signale an die elektronische Steuereinrichtung (10) abgibt.

14. Beregnungsanlage nach einem der Ansprüche 1 bis 13, **gekennzeichnet durch** eine vorzugsweise elektrisch verstellbare Einrichtung (15) zur Einstellung des dem Regnerarm (6) zugeführten Wasserdrucks.

15. Beregnungsanlage nach einem der Ansprüche 1 bis 14, **dadurch gekennzeichnet, dass** die elektronische Steuereinrichtung (10) die aktuellen Horizontalwinkelbereiche des Regnerarmes (6) in Abhängigkeit von der erfassten Windstärke und/oder Windrichtung festlegt.

16. Beregnungsanlage nach einem der Ansprüche 1 bis 15, **dadurch gekennzeichnet, dass** die elektronische Steuereinrichtung (10) neben dem Horizontalwinkelbereich auch die Höheneinstellung des Regnerarmes (6) und/oder den dem Regnerarm (6) zugeführten Wasserdruck festlegt, und zwar vorzugsweise in Abhängigkeit von der gewünschten eingebbaren Wurfweite und/oder der Windstärke und/oder der erfassten Windrichtung.

17. Beregnungsanlage nach einem der Ansprüche 1 bis 16, **dadurch gekennzeichnet, dass** der Regnerarm (6) auf einem bewegbaren Träger (3, 42) beispielsweise einem verfahrbaren Regnerwagen (3), verschwenkbar gelagert ist.

18. Beregnungsanlage nach Anspruch 17, **gekennzeichnet durch** eine Wickeltrommel (1) für einen Wasserschlauch (2), an dessen Ende der verfahrbare Regnerwagen (3) angeordnet ist, wobei der Regnerwagen (3) über den Wasserschlauch (2) zur Wickeltrommel (1) ziehbar ist, wobei die Einzugsgeschwindigkeit vorzugsweise in Abhängigkeit vom jeweils überstrichenen Horizontalwinkelbereich verändert wird.

19. Beregnungsanlage nach Anspruch 17, **dadurch gekennzeichnet, dass** der bewegbare Träger ein um eine Drehachse (43) umlaufender Bewässerungsarm (42) ist, an dem - vorzugsweise im Bereich des freien Endes - der Regnerarm (6) seinerseits verschwenkbar gelagert ist.

20. Beregnungsanlage nach einem der Ansprüche 17 bis 19, **dadurch gekennzeichnet, dass** die elektronische Steuereinrichtung (10) die aktuellen Horizontalwinkelbereiche des Regnerarmes (6) in bezug auf den bewegbaren Träger (3, 42) in Abhängigkeit von der Ortslage des Trägers (3, 42) festlegt.
